# EUROPEAN PATENT SPECIFICATION

(11) **EP 1 578 340 B1**
(45) Date of publication and mention of the grant of the patent: **25.02.2009**
(21) Application number: 03781110.6
(22) Date of filing: 22.12.2003
(51) Int. Cl.: A61H 31/00

(54) **A DEVICE FOR PLACEMENT BETWEEN THE HANDS OF A PERSON PERFORMING CHEST COMPRESSION AND THE CHEST OF A PATIENT**
VORRICHTUNG ZUR POSITIONIERUNG ZWISCHEN DEN HÄNDEN EINER EINE THORAXKOMPRESSION DURCHFÜHRENDEN PERSON UND DEM THORAX EINES PATIENTEN
DISPOSITIF A PLACER ENTRE LA POITRINE DU PATIENT ET LES MAINS D'UNE PERSONNE EFFECTUANT UNE REANIMATION CARDIO-PULMONAIRE

(30) Priority: 23.12.2002 NO 20026218
(43) Date of publication of application: 28.09.2005
(73) Proprietor: Laerdal Medical AS, 4002 Stavanger (NO)
(72) Inventor: FOSSAN, Helge, N-4015 Stavanger (NO); EGELANDSDAL, Einar, N-4033 Stavanger (NO); MYKLEBUST, Helge, N-4025 Stavanger (NO); MORALLEE, Kenneth, G., Orpington, Kent BR5 1QZ (GB)
(74) Representative: Tofting, Arild
(86) International application number: PCT/NO2003/000435
(87) International publication number: WO 2004/056303

(56) References cited:
- US-A- 4 554 910
- US-A- 5 496 257
- US-A- 5 645 522
- US-A1- 2002 078 954
- US-B1- 6 306 107

## Description

The present invention relates to equipment for use in cardiopulmonary resuscitation (CPR), and more particularly a device for placement between the hands of a person performing chest compression and the chest of a patient. The device may also be used for CPR training. Even more particularly the device is designed to emit a sound when chest compression is performed with a force exceeding a pre-defined value and optionally also to emit a sound indicating the desirable rate of chest compression. Even more particular the device is defined by the features indicated in the preamble of the subsequent claim 1.

Numerous studies have shown that acquisition and retention of CardioPulmonary (CPR) skills are poor. This has been reviewed extensively by Kaye and Mancini (Kaye W, Mancini ME . Teaching adult resuscitation in the United States -time for a rethink, Resuscitation 1998; 37: 177-87).

During testing on manikins, few compressions and ventilations are performed correctly with slow rate and inadequate depth of compressions and under-inflation being the most common errors. Similarly when the quality of CPR on patients has been studied, less than half of bystanders were performing good CPR defined as a palpable pulse during chest compressions and chest expansion. Whilst chest expansion can be observed by a second operator if present, few lay people (and also some medical professionals) can palpate a pulse accurately. As a result lay rescuers are no longer taught or expected to perform a pulse check (Guidelines 2000 for Cardiopulmonary Resuscitation and Emergency Cardiovascular Care. Supplement to Circulation 2000; 102: 122-59).

Accordingly an alternative means of ensuring adequate chest compressions is needed that could be easily used by lay persons. One reason why rescuers do not compress the chest significantly is felt to be concern about possibly injuring the patient by either pressing too hard or in the wrong place. A simple device that facilitated pressing in the correct place and alerted the rescuer when the compression was sufficient should help to allay this concern.

Good chest compressions are defined (according to Guidelines 2000 denoted above) as those, which depress the chest in an adult, by 4 cm at a rate of 100 per minute. In order to depress the chest of an average adult this distance, a force of about 35 kPa (kilo pascal) is required. In a child, the chest should be depressed about 2.5 cm requiring a force of about 20 kp. Audio prompts have been shown to improve the timing of compressions and ventilations and are now recommended for use during CPR (Guidelines 2000).

Devices incorporating a pressure gauge have been available for many years. When placed on the patient's chest, these guide the rescuer on the amount of force required. More recently a device has been marketed that combines this feature with audio prompts to guide the timing of chest compressions (Boyle AJ et al. Improvement in timing and effectiveness of external cardiac compressions with a new non-invasive device: the CPR Ezy. Resuscitation 2002; 54: 63-7).

The CPR-Ezy is disclosed in US 2002/078954 and is a generally rectangular device to be placed between the hands of a treating person and the chest of a patient. It comprises an LED-display that indicates the pressure visually. The device also contains an electronic metronome that emits both sound and light.

The CPR-Ezy and similar devices are too expensive (USD 150 to USD 250) and bulky to be accepted for widespread use by lay rescuers. In comparison, ventilation aids are widely used by lay rescuers: they generally cost about USD 2 to USD 15 and fit in a wallet or pocket. Furthermore the CPR-Ezy is dependent on an electric power source, e.g. a battery. A battery will be susceptible to drainage even when not in use. A lay person may have the device in his possession for several years before facing a situation in which he may bring it into use. By that time the battery may have run flat and the device will be useless. If the battery still works the rescuer has to give his visual attention to the LED-display to be able to observe if the compression is sufficient. This means that he is unable to observe the patient's reactions while compressing. A LED-display will also be difficult to observe in bright light conditions, e.g., sunshine. Furthermore, the treating person usually will need to contact an emergency rescue centre on the telephone. He may then get guidance from health personnel. If the health personnel can hear over the phone if the treating person is compressing with sufficient force or not, they may provide better guidance. In the CPR-Ezy the lack of sound indicating compression force preclude the health personnel from this valuable information.

Another prior art device is shown in US 4,554,910. This device has a lower surface that is intended to be placed on a patient's chest and an upper surface that the treating person presses against. Between the surfaces are a spring and a rectangular spring steel body. The spring steel body has sidewalls with inwardly directed dimples. When the spring steel body is compressed the dimples will be deflected outwardly creating an audible click.

Although, this device gives an indication of when the pressure required is attained, and is independent of a battery, it has a large size that makes it awkward to carry around and does not fit in most pockets. The sound generator is a box shaped member that has to be deformed. It contains a large amount of metallic parts that are costly to produce and increase the weight. This makes the availability of the device poor. Availability is very important, and the user should be able to carry the device with him at all time, e.g. on a key ring. Very little difference in size and weight may be the difference between a device that the user accepts to carry around at all times and a device that is left in a drawer.

US 4863385 describes a fully electronic device. It is seemingly very advanced, incorporating synthetic speech, indicator lamps and buzzers. It can also be set for different person sizes, and it can detect pulse. However, it does not include a significant feature: detection of the compression force. This prior art device is consequently, except for the pulse detection, a pure "instruction manual". The object is that the user turns on the device and the device will give the user instructions (in the form of synthetic speech) about what he is supposed to do, in which sequence and a which time. The indicator lamps are switched on to give the user a signal on what is the next task. This device has no means to detect if the user is performing correct chest compression, at least not if the chest compression is performed with sufficient force. The device is not intended for placement between the hands of the performer and the chest of the patient.

The device has a manual switch that can be turned into one of four different on positions. Consequently, the user must himself remember to turn on the device.

US 5496257 is also fully electronic. The chest compression is displayed in a display. Electronic sound signals may be given to indicate too little or too large chest compression force. These signals are electronic and the force is measured electronically. Consequently, the device is depending on a battery to function. Without a battery the device will be completely useless.

This device has an external switch that may be turned to one of two on positions. Each position is connected to a separate battery, so that an extra power supply is available if the first battery is flat. This shows the importance of a functioning device when the need occurs. However, this results in an expensive device that is awkward to operate.

US 6013041 is intended solely for simulation of chest compression. Consequently, it is shaped like a long telescopic tube, providing a certain compression stroke, which is supposed to give a substantially realistic movement during training. The device is not suitable for use on a patient. If an attempt was made to use the device on a patient, the device would absorb a substantial part of the movement and the force from the performer. Consequently, the performer would have no control on how much of the movement was transferred to the patient. The effect would be similar to placing several pillows between the hands of the performer and the chest of the patient. Due to its length the device would also be hard to control and very easily tip sideways during the compression. Furthermore it is much too large to fit in a pocket.

The object of the present invention is to provide an aid to improving the timing and effectiveness of chest compressions during both training and patient use at a price and size that would enable all lay responders to purchase it and carry it at all times, preferably together with their ventilation aid.

This is achieved by the novel features given in the subsequent claim 1.

Preferred embodiments of the invention will be described in detail as examples, referring to the accompanying drawings, in which:
Figure 1 shows a block diagram of a CPR feedback device according to the invention,
Figure 2 shows a device of the present invention in side elevation view,
Figure 3 shows the device of figure 2 in plan view,
Figure 4 show schematically a partial longitudinal section of the device of figure 2,
Figure 5 shows in plan view a detailed example of the lower part of the device,
Figure 6 shows in plan view a detailed example of the upper part of the device,
Figure 7 shows an exploded view of the device in a detailed embodiment,
Figure 8 shows a longitudinal cross section of the detailed embodiment, and
Figures 9 and 10 show schematically a partial longitudinal cross section of an alternative embodiment that can be used for both children and adults.

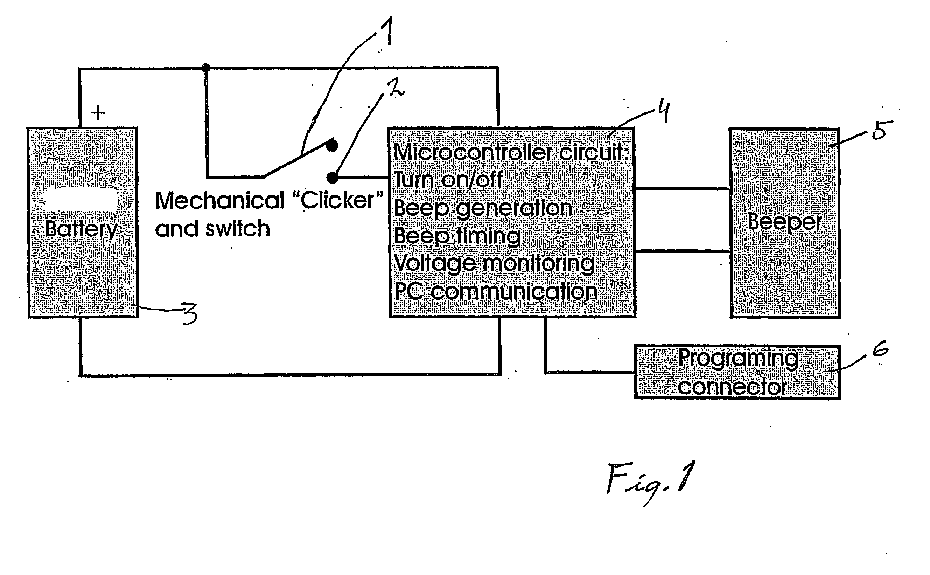

Figure 1 shows a block diagram containing the main functional features of the CPR feedback device: a mechanical sound generator 1, e.g. a "clicker metal", a switch 2, an electric power source 3, e.g. a battery (Preferably a long lasting battery, like lithium or alcaline), a microcontroller circuit 4 and a beeper 5, e.g., of a piezo. Optionally, a programming connector 6 may also be present.

The battery 3 is connected to the microcontroller 4, at least partly through the switch 2. The microcontroller 4 is connected to the beeper 5 and the programming connector 6.

The mechanical sound generator 1 may be integrated with the switch 2 so that when the CPR feedback device is compressed for the first time the mechanical sound generator switches on the power to the microcontroller 4.

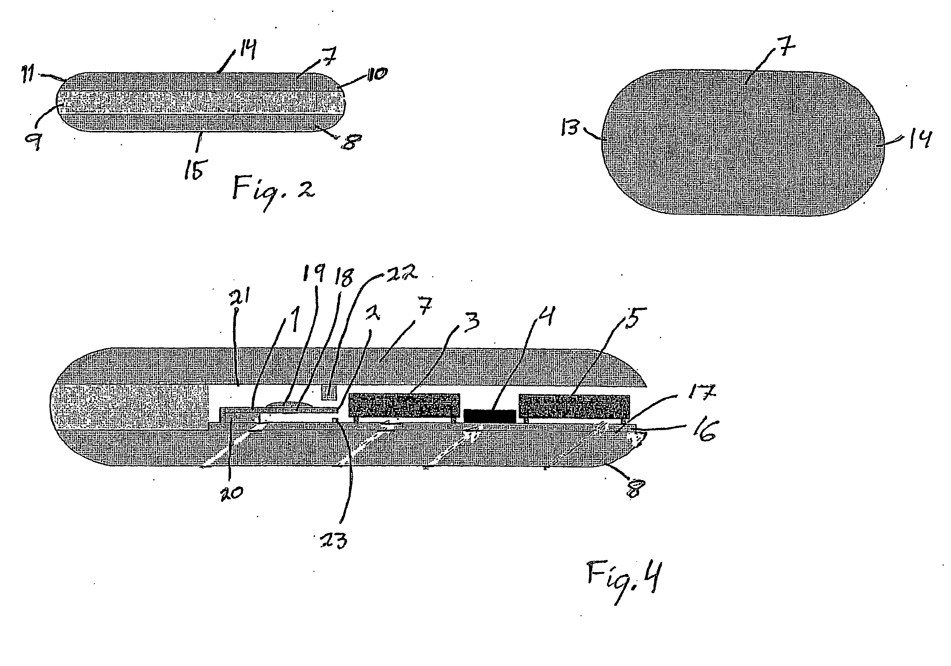

Figure 2 shows the CPR feedback device in side elevation view. The device comprises an upper part 7, a lower part 8 and a central part 9. The upper and lower parts 7 and 8 are preferably made from relatively hard plastic. The central part 9 is preferably made from rubber or pliable plastic. The upper and lower parts 7, 8 have both a generally flat surface 14, 15. The sides of the device are rounded as shown by reference numbers 10 and 11. The upper and lower parts are moveable towards each other, as will be explained below. The central part 9 may be formed as a gasket and be inserted in grooves (not shown) in the upper and lower part 7, 8 and/or glued or otherwise sealed to the upper and lower parts 7, 8.

Figure 3 shows the device of figure 2 in plan view. The upper and lower parts 7, 8 have rounded ends 12, 13. The rounded configuration of the sides and ends of the device will make it fit snugly in the hands of the treating person. It will also prevent damages on the skin of the patient. Preferably the upper and lower parts 7, 8 are made of a plastic material that gives a rubbery feel, to avoid hurting the hands of the treating person after a long time of continuous use and to avoid slipping. Although this shape of the device is found to be suitable other shapes are also conceivable, e.g. a circular disc shape or a heart shape.

Figure 4 shows schematically the device of figures 2 and 3 in a partly longitudinal section. The central part 9 has been cut away to reveal the interior of the device. A printed circuit board (PCB) 16 is attached to the interior surface 17 of the lower part 8. In the PCB 16 the interior components of the device is attached. From left to right in figure 4 these are: the mechanical sound generator and switch 1, 2, the battery 3, the microcontroller circuit 4 and the beeper 5.

The mechanical sound generator 1 comprises a plate 18 made from spring steel or a material with similar properties. The plate 18 has an indentation 19 formed therein. The plate 18 is at a first end attached to a foot 20, the opposite end being free. Directly above the free end of the plate 18 on the interior surface 21 of the upper part 8 is a peg 22. Directly below the free end of the plate 18 is a contact 23, which is connected to the PCB 16.

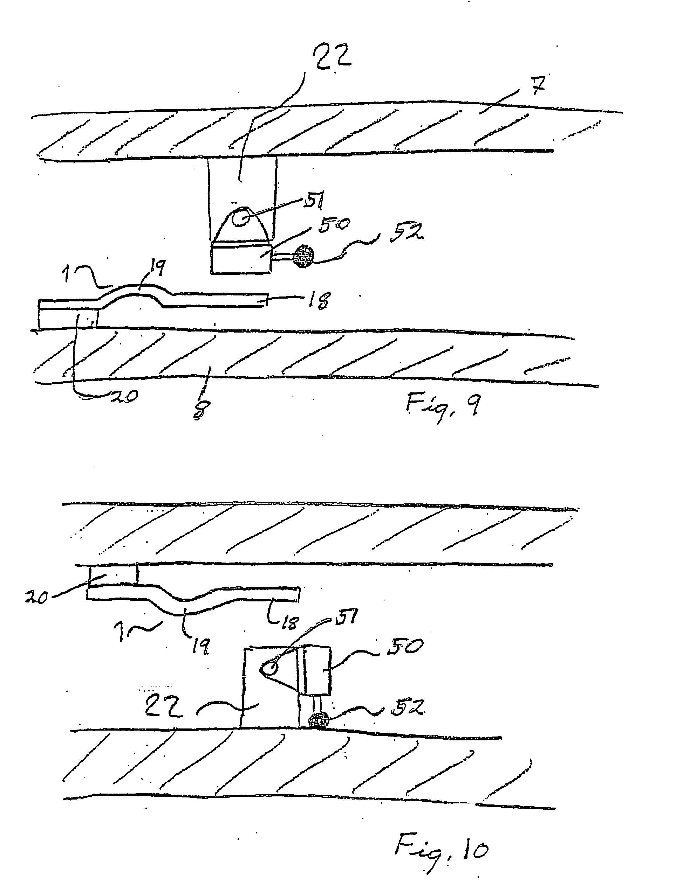

In the previous and the following the terms upper and lower, above and below etc. are used purely with reference to the drawings (except for figure 10 in which the upper part is the lowermost). Obviously the device may be turned around and will work just as well in this orientation. Consequently, the terms indicating an orientation of the different parts should not be construed to have any restrictive meaning on the invention.

The general function of the device according to the present invention will now be described.

When the device is brought into use for the first time the treating person simply positions the device in the correct area on the chest of the patient. On one or both of the surfaces 14, 15 of the upper and lower parts 7, 8 there may be printed instructions that shows where to place the device and how to use it, preferably in the form of text, drawings and/or symbols.

When the device is thus placed on the right spot, the treating person starts pressing with his hands on the upper surface 14. This pressing action will move the upper part 7 towards the lower part 8 against the pliability of the central part 9, which will be compressed. As the peg 22 contacts the free end of the plate 18 this will bend downward towards the contact 23. About the same time as the free end of the plate reaches the contact 23, the indentation 19 will flex in the opposite direction and emit a clicking sound. The contact between the contact 23 and the plate 18 will close the power supply circuit to the microcontroller circuit 4. This may preferably be done by way of an electronic holding circuit, e.g. a relay or a transistor that closes the power supply circuit. Optionally, a timer circuit may be present that automatically discontinues the power supply to the microcontroller 4 after a certain period of time of inactivity.

The means for turning on the power supply may also be in the form of a microphone or other piezoelectric device that picks up the sound energy of the first click of the plate 18 and uses this energy input to turn on the power supply.

The microcontroller circuit 4 contains an electronic metronome that with a predetermined rate activates the beeper 5 to emit a sound. The rate may be fixed or variable by programming of the microcontroller 4.

Thus, the device, once activated will give out a beep each time the treating person is supposed to compress the chest of the patient. Optionally the microcontroller may provide pauses in the beeping, e.g., every 15th beep, to allow for lung inflation. The pause may be a set time, which is adapted to the time required for giving, e.g., two lung inflations.

Another modus is that the first time the device is compressed it will automatically turn itself on and give the first beep. Thereafter the device will continue to give out beeps at a fixed rate until a total of 14 beeps have been given. After the 14^{th} beep the device will turn itself off automatically. When the treating person compresses for the 15^{th} time he will hear no beep. This is to be taken as a signal to stop the compression and perform lung inflations. When the lung inflations, and possibly other necessary work, have been performed, the compression is started again. The device, which in the meantime has been off, will again be switched on as the upper and lower parts are moved together and consequently the internal switch is operated. At the first compression the device will give a first of in total 14 beeps before it turns itself off automatically again.

The mechanical sound generator 1 will emit a clicking sound every time the treating person compresses the device, and thus also the chest of the patient, with a force exceeding a predetermined value, the predetermined force being an estimate of the force required to achieve a sufficient compression depth for effective CPR.

If the force is less than the predetermined value no sound will be emitted from the mechanical sound generator 1. Thus the treating person will realise that he has not pressed hard enough and has to increase his force. The mechanical sound (click) should be heard with approximately the same rate as the beep initiated by the metronome, provided the user is performing correctly.

In order to avoid that the treating person reacts on the metronome beep as the signal for sufficient compression force, the metronome beep may be timed so that the first beep occurs only after the click indicating sufficient chest compression, e.g. when the force is sufficient to activate the click. This may be achieved, e.g., by a microphone picking up the click. When the treating person has heard the first click he will know that this is the sound for sufficient force, and he will listen for this sound every time he performs a chest compression.

For testing purposes it may be possible to turn off the beeper. This may be the case if the object is to practice sufficient chest compression force only. To avoid external switches that may be operated by accident the turning on and off of the beeper may be done by, e.g. pressing down to the click is heard and maintaining this pressure for a period of time, e.g. 5 seconds. To achieve this function a suitable electronic device may be coupled to the switch turning on the electronic circuit, detecting that the switch is closed for a specific period of time.

The force required for making the mechanical sound is chiefly dependent on the elasticity and design of the central part 9 and the design and stiffness of the plate 18. To vary the force required different types of plates 18 and central parts 9 may be available. Thus it may be possible to make different versions of the device adapted, e.g., for adults and children and mark these accordingly.

If the battery should run flat or be exhausted before the first time use due to a long storage period, the microcontroller circuit 4 will of course not work. However, the most important feature of the device will still work, which is the signal indicating sufficient compression force. Thus the device will still be usable, even without a battery.

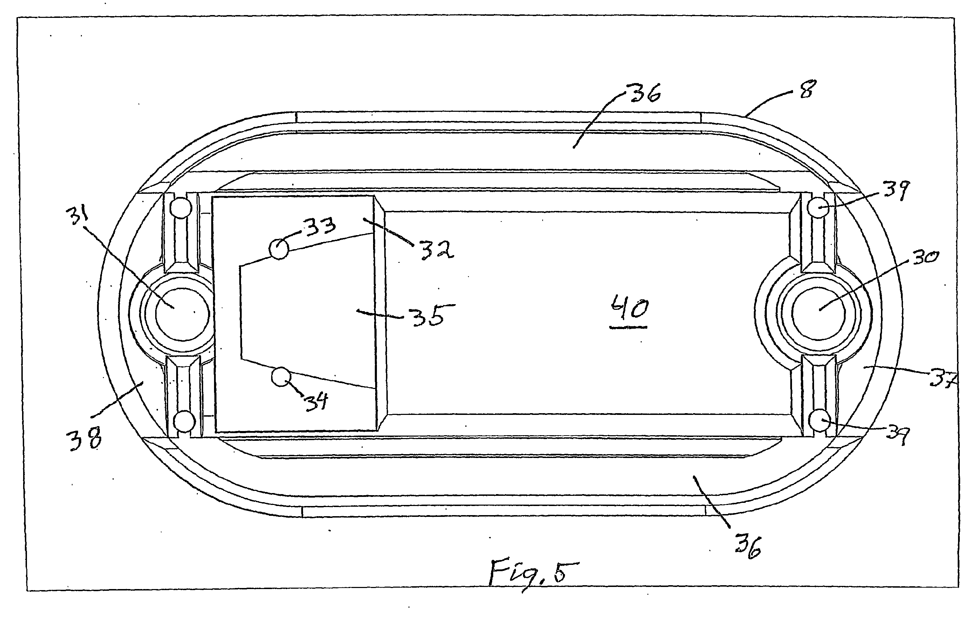

Figures 5 - 8 shows a detailed embodiment of the device of the present invention. For practical reasons the electronic components have been left out, but it is obvious for a person of skill how these components should be mounted in the device.

Figure 5 shows the lower part 8 in plan view seen from the inside of the device. It has one hole 30, 31 at each end for accommodating a screw sleeve of the upper part (which will be explained below). Close to one end of the lower part 8 is a base socket 32 with two screw holes 33, 34 for mounting the clicker plate 18. The base socket 32 also has a concave depression 35 formed therein. The clicker plate 18 is mounted with the indentation 19 facing towards the depression 38. The depression 35 will prevent pressure on the indentation 19, when the clicker plate 18 is mounted against the base socket 32. Further more the depression 19 makes it possible to have the bending axis of the clicker plate going through the indentation 19. This makes it easier to obtain a distinct clicking sound when the clicker plate 18 is bent.

A groove 36 for a rubber string is formed on each longitudinal side of the lower part 8. In the area of the holes 30, 31 there are open sections 37, 38 not intended for receiving a rubber string. Through the openings remaining in these areas when the upper and lower parts are joined, the clicking sound from the plate 18 is emitted unobstructed by structural details. At the ends of the grooves 36 are stoppers 39 that prevent the rubber sting form sliding out of the groove and act as abutments when the lower and upper parts are moved towards each other.

In the central part of the lower part 8 a depressed area 40 is formed to accommodate the electronic components.

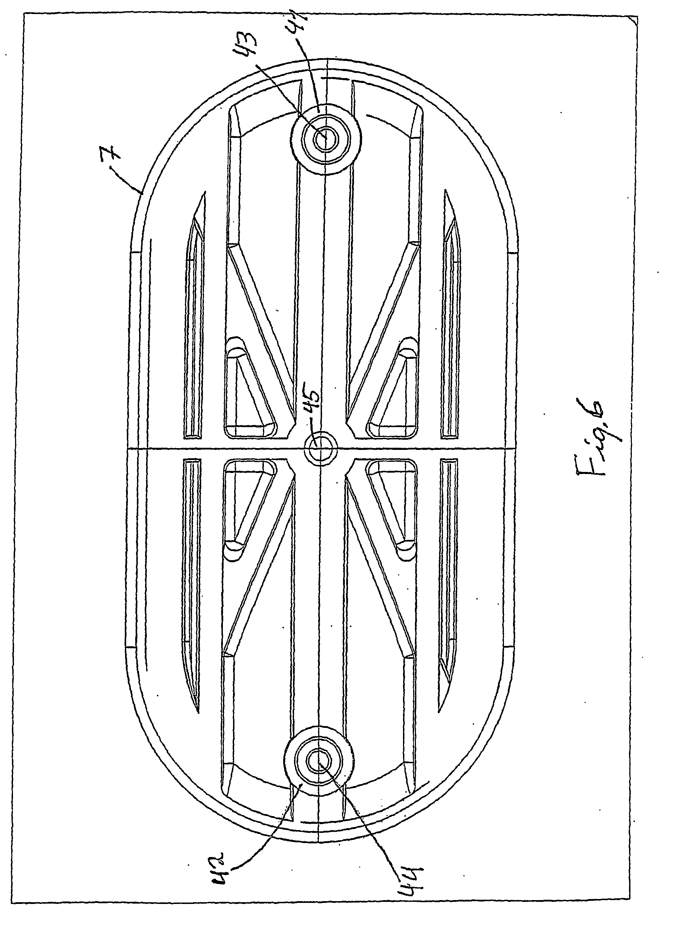

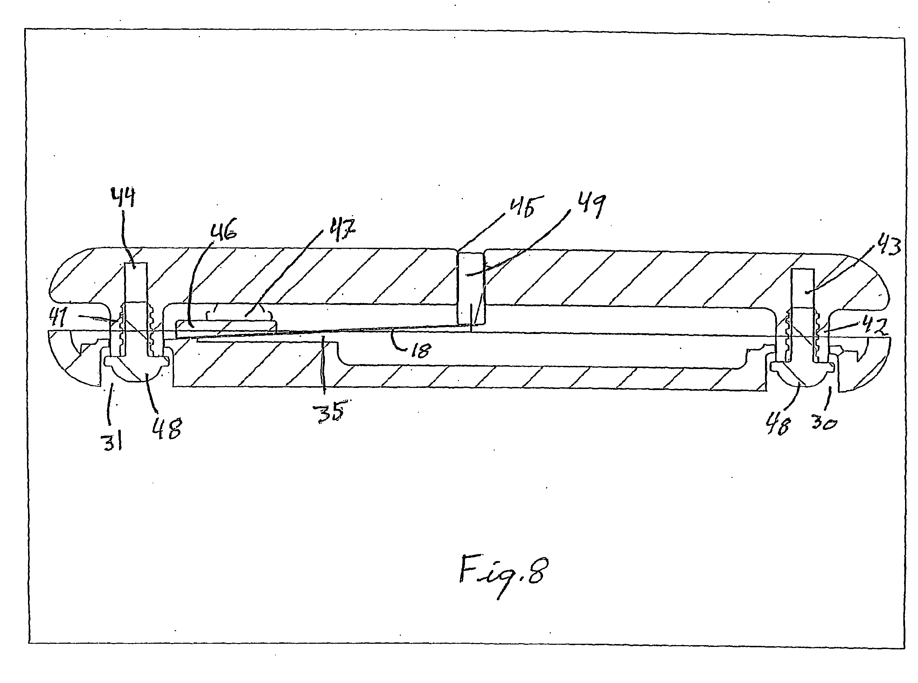

Figure 6 shows the upper part 7 in plan view seen from the inside of the device. The upper part 7 has a socket 41, 42 at each end thereof. The sockets 41, 42 are configured to enter the holes 30, 31 of the lower part 8. In the sockets 41, 42 are blind holes 43, 44 for a screw (see figure 8). Centrally in the upper part 7 is a threaded hole 45 for an adjustment screw (see figure 8). The upper part 7 has ribs formed on the inside surface to stiffen and strengthen the part.

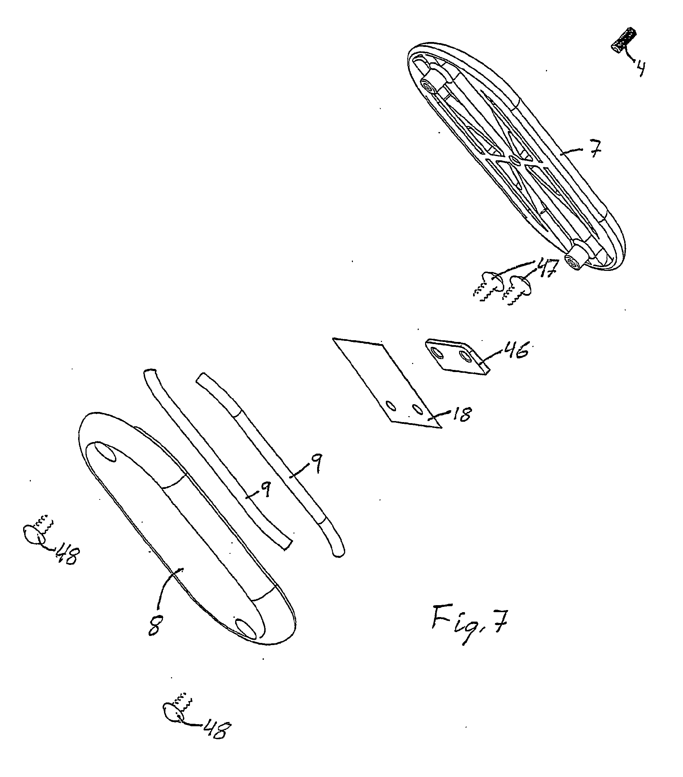

Figure 7 shows an exploded view of the device of the present invention. It shows the upper part 7 and the lower part 8. Between these are shown the rubber strings 9, the plate 18, a clamp 46 for the plate 18 and a pair of screws 47, for securing the plate 18 to the base socket 32. A pair of assembly screws 48 are also shown, that are intended for attaching the lower and the upper parts to each other. Lastly, an adjustment screw 49 is shown.

Referring to figure 8, the assembly of the device of figures 5 - 7 will be explained. Figure 8 shows a longitudinal cross section of the device. The plate 18 is screwed to the base socket 32 by means of the clamp 46 and the screws 47. The plate 18 has its state of equilibrium extending above the depression 35. The sockets 41, 42 of the upper part 7 is entered through the holes 30, 31 of the lower part. The screws 48 are entered through the holes 30, 31 and screwed into the holes 43, 44 until the screw heads come to rest against the sockets 41, 42. The screw heads of the screws 48 are of a larger diameter than the smallest diameter of the holes 30, 31. As shown in figure 8 the screw heads of the screws 48 can move a distance from the smallest diameter of the holes 30, 31 when the upper and lower parts are pressed towards each other.

The adjustment screw 49 is screwed into the hole 45. The further in the adjustment screw is screwed the lesser the force required to create a click from the plate 18 will be. Advantageously, the hole 45 may be sealed by a suitable sealing compound after the adjustment is completed, to avoid tampering.

It is also possible to incorporate ability for different functionality depending on the orientation of the device, i.e. if the upper part is facing up or down. One side of the device could be for adult compressions, the other for child compressions. An embodiment with this feasibility is shown in figures 9 and 10, which show a longitudinal section of a part of the device according to the present invention. As for the embodiments above, this embodiment comprises the mechanical sound generator 1, with the foot 20, attached to the lower part 8, and the plate 18. The indentation 19 in the plate 18 is also shown. To the upper part 7 a peg 22 is attached. The main difference between this embodiment and the previous embodiment lies in the distance element 50, which is swingably mounted to the end of the peg 22 via a pivot 51, so that the element 50 in a first position is situated at the prolongation of the peg 22, as shown in figure 9. In a second position the element 50 is swung to the side of the peg 22, as shown in figure 10. The element 50 and the peg 22 are suitably shaped and adapted to each other so that the element 50 may swing only to one side of the peg 22. Attached or integrated to the side of the element 50 is a weight 52. The weight acts to swing the element into the first position when the device is oriented as shown in figure 9, i.e. with the upper element at the top. When the device is turned the other way around, so that the upper element 7 is situated at the bottom, as shown in figure 10, the weight, which is influenced by gravity swings the element 50 into the second position. In the first position of the element 50 the effective length of the peg 22 will be longer than in the second position. This means that a shorter distance has to be covered by the upper element 7 in the position shown in figure 9, than in the position shown in figure 10. Consequently, a lesser force has to be applied in the figure 9 position than in the figure 10 position. The figure 9 position may then function as the child position and the figure 10 position as the adult position.

In the fully electronic embodiment of the device this feature may be achieved by adding a component coupled to the microcontroller circuit, the component being sensitive to the axis of the gravity. Numerous such components are available, e.g., an orientation sensitive accelerometer or level sensitive switches, e.g. a mercury switch. This means that the device could perform differently depending on the orientation.

Indications on the outer surfaces of the upper and lower parts should be present to clearly indicate to the user, which side to use on which patients.

The device may also have a means to maintain the placement on the chest, e.g., a sticky surface or a surface shaped such that a small negative pressure is created between the patient's skin and the device.

The mechanical sound may be generated in numerous ways. Other possible means of providing a mechanical sound are:
- Mounting a string with tension between two supports on one of the lower or upper parts, and mounting a plectrum on the other of the parts, so that when the upper and lower parts are pressed against each other the plectrum will strum on the string. With this alternative it is also possible to arrange two (or more) strings at different heights and giving different tones, so that one tone, e.g. the highest tone, indicates the compression force for a child and the other tone indicates the compression depth for an adult.
- Sealing the cavity between the upper and lower part so that it is possible to compress air when the upper and lower parts are moved against each other. When the pressure in the cavity reaches a pre-defined pressure a valve will open and release the air through a sound emitting means, e.g., a flute. When the force is removed from the device air will enter the cavity again, possibly through a check valve.
- Utilising the principle of friction and resonance, as is the case with a violin. Providing two objects that move with friction relative each other when a pre-defined force is applied, the two objects emitting a sound because of the friction and hence resonance between them.

However, the manner of which the mechanical sound is generated is not of substantial importance, as long as it is generated with reliability and the force required to generate the sound does not vary substantially over the time the device is stored and used.

The switch for switching on the microcontroller circuit may also be provided by a separate switch not integrated with the mechanical sound generator. Most preferably, however, the switch is enclosed within the device and is operated by pressing the upper and lower parts against each other.

Although a mechanical sound generator is preferred for indication of sufficient compression force (strictly speaking: depth), alternatively an electronic sound generator may also be used. This may be a part of the same circuit as the sound generator making the beep indicating the compression rate or be a separate circuit. An electronic sound generator will be dependent on electric power. Instead of a battery a power generator generating electric power from the movement between the upper and lower parts during the compression is also conceivable

## Claims

1. A device for placement between the hands of a person performing chest compressions and the chest of a patient or a manikin, comprising:
a first part (7) and a second part (8), said parts (7, 8) being moveable towards each other when a compression is performed,
a return means (9) between said parts (7, 8) for moving said parts (7, 8) away from each other again when the compression is relieved,
an electric power source (3) between said parts (7, 8),
an electronic sound generating means (5) between said parts, and coupled to said power source (3), for generating a repeating sound indicating a desired compression rate
**characterised in that** the device further comprises
a mechanical sound generator (1) between said parts (7, 8) for generating a sound when said parts (7, 8) are moved towards each other with a force exceeding a pre-defined value, and
a switch (2) between said parts (7, 8), said switch (2) being operated by the movement of said parts (7, 8) towards each other, and said switch (2) operably coupling said power source (3) to said electronic sound generating means (5).

2. Device according to claim 1, **characterised in that** said switch (2) is integrated in said mechanical sound generator (1).

3. Device according to claims 1 or 2, **characterised in that** said switch (2) includes a microphone or other piezoelectric means that is adapted to pick up the sound energy created by said mechanical sound generator (1) and utilize this energy to couple said power source (3) to said electronic sound generating means (5).

4. Device according to any of the preceding claims, **characterised in that** the first occurrence of the repeating sound is adapted to occur after the first occurrence of the mechanical sound.

5. Device according to any of the preceding claims, **characterised in that** the repeating sound is adapted to be switched off and on by pressing the first and the second parts (7, 8) together with a sufficient force over a specified period of time.

## Patentansprüche

1. Vorrichtung zur Positionierung zwischen den Händen einer eine Thoraxkompression durchführenden Person und dem Thorax eines Patienten oder einer Puppe, mit
einem ersten Teil (7) und einem zweiten Teil (8), die zueinander bewegt werden können, wenn eine Kompression durchgeführt wird,
einem Rückstellmittel (9) zwischen den Teilen (7, 8), um die Teile (7, 8) wieder auseinander zu bewegen, wenn die Kompression entlastet wird,
einer elektrischen Stromquelle (3) zwischen den Teilen (7, 8) und
einem elektronischen Tonerzeugungsmittel (5) zwischen den Teilen, das an die Stromquelle (3) gekoppelt ist, zum Erzeugen eines sich wiederholenden Tons, der eine gewünschte Kompressionsrate anzeigt,
**dadurch gekennzeichnet, dass** die Vorrichtung ferner einen mechanischen Tonerzeuger (1) zwischen den Teilen (7, 8) zum Erzeugen eines Tons, wenn die Teile (7, 8) mit einer einen vordefinierten Wert übersteigenden Kraft zueinander bewegt werden, sowie einen Schalter (2) zwischen den Teilen (7, 8) umfasst, der durch die Bewegung der Teile (7, 8) aufeinander zu betätigt wird, wobei der Schalter (2) die Stromquelle (3) betriebsmäßig an das elektronische Tonerzeugungsmittel (5) koppelt.

2. Vorrichtung nach Anspruch 1, **dadurch gekennzeichnet, dass** der Schalter (2) in dem mechanischen Tonerzeuger (1) integriert ist.

3. Vorrichtung nach Anspruch 1 oder 2, **dadurch gekennzeichnet, dass** der Schalter (2) ein Mikrofon oder ein anderes piezoelektrisches Mittel aufweist, das geeignet ist, die von dem mechanischen Tonerzeuger (1) erzeugte Schallenergie aufzunehmen und diese Energie zu verwenden, um die Stromquelle (3) an das elektronische Tonerzeugungsmittel (5) zu koppeln.

4. Vorrichtung nach einem der vorhergehenden Ansprüche, **dadurch gekennzeichnet, dass** das erste Auftreten des sich wiederholenden Tons geeignet ist, nach dem ersten Auftreten des mechanischen Tons aufzutreten.

5. Vorrichtung nach einem der vorhergehenden Ansprüche, **dadurch gekennzeichnet, dass** der sich wiederholende Ton geeignet ist, durch Zusammendrücken des ersten und des zweiten Teils (7, 8) mit ausreichender Kraft und über einen bestimmten Zeitraum hinweg an- und ausgeschaltet zu werden.

## Revendications

1. Dispositif à placer entre les mains d'une personne effectuant des compressions thoraciques et la poitrine d'un patient ou d'un mannequin, comprenant :
une première partie (7) et une seconde partie (8), lesdites parties (7, 8) étant mobiles l'une vers l'autre lorsqu'une compression est effectuée,
des moyens de retour (9) entre lesdites parties (7, 8) pour écarter à nouveau lesdites parties (7, 8) l'une de l'autre lorsque la compression est relâchée,
une source d'alimentation électrique (3) entre lesdites parties (7, 8),
des moyens de génération de son électroniques (5) entre lesdites parties, et couplés à ladite source d'alimentation (3), pour générer un son répétitif indiquant un rythme de compression souhaité,
**caractérisé en ce que** le dispositif comprend en outre
un générateur de son mécanique (1) entre lesdites parties (7, 8) pour générer un son lorsque lesdites parties (7, 8) sont déplacées l'une vers l'autre avec une force excédant une valeur prédéfinie, et un commutateur (2) entre lesdites parties (7, 8), ledit commutateur (2) étant actionné grâce au mouvement desdites parties (7, 8) l'une vers l'autre, et ledit commutateur (2) couplant de façon opérationnelle ladite source d'alimentation (3) auxdits moyens de génération de son électroniques (5).

2. Dispositif selon la revendication 1, **caractérisé en ce que** ledit commutateur (2) est intégré dans ledit générateur de son mécanique (1).

3. Dispositif selon les revendications 1 ou 2, **caractérisé en ce que** ledit commutateur (2) comprend un microphone ou d'autres moyens piézoélectriques qui est(sont) adapté(s) pour capturer l'énergie sonore créée par ledit générateur de son mécanique (1) et utiliser cette énergie pour coupler ladite source d'alimentation (3) auxdits moyens de génération de son électroniques (5).

4. Dispositif selon l'une quelconque des revendications précédentes, **caractérisé en ce qu'**il est prévu que la première occurrence du son répétitif se produise après la première occurrence du son mécanique.

5. Dispositif selon l'une quelconque des revendications précédentes, **caractérisé en ce qu'**il est prévu que le son répétitif soit coupé et soit activé en appuyant conjointement sur les première et seconde parties (7, 8) avec une force suffisante pendant une période de temps spécifiée.
